# EUROPÄISCHE PATENTANMELDUNG

(11) **EP 3 888 844 A1**
(43) Veröffentlichungstag der Anmeldung: **06.10.2021**
(21) Anmeldenummer: 20167483.5
(22) Anmeldetag: 01.04.2020
(51) Int. Cl.: B23Q 7/14, B23K 26/70, B23Q 5/34, B23Q 7/00

(54) **WECHSELVORRICHTUNG FÜR EINEN WECHSEL VON WENIGSTENS ZWEI WERKSTÜCKAUFLAGEN FÜ EINE BEARBEITUNGSMASCHINE**

(71) Anmelder: TRUMPF Werkzeugmaschinen GmbH + Co. KG, 71254 Ditzingen (DE)
(72) Erfinder: Schmauder, Frank, 72555 Metzingen (DE); Knobel, Carsten, 02681 Wilthen (DE); Nieding, Dr. Philipp, 70469 Stuttgart (DE); Kupferschmidt, Uwe, 02681 Schirgiswalde (DE); Wowtscherk, Patrick, 02699 Neschwitz (DE); Witte, Robert, 01909 Frankenthal (DE); Sjödin, Niclas, 02625 Bautzen (DE); Brandt, Jürgen, 71254 Ditzingen (DE)
(74) Vertreter: Mammel und Maser

(57) **Zusammenfassung**

Die Erfindung betrifft eine Wechselvorrichtung für einen Wechsel von wenigstens zwei Werkstückauflagen (22, 23, 69) für eine Bearbeitungsmaschine (14), mit einem Grundgestell (31), welches eine Trägervorrichtung (32) für zumindest zwei Werkstückauflagen (22, 23, 69) aufweist, die in der Höhe durch die Trägervorrichtung (32) verfahrbar sind, sodass eine der Werkstückauflagen (22, 23, 69) in eine Arbeitsebene überführbar ist, in welcher die Werkstückauflage (21, 22, 69) von der Trägervorrichtung (32) in die Bearbeitungsmaschine (14) hineinfahrbar und aus dieser herausführbar ist, und mit einer zwischen dem Grundgestell (31) und der Trägervorrichtung (32) wirkenden Hubvorrichtung (36), durch welche die Trägervorrichtung (32) in der Höhe relativ zum Grundgestell (31) zur Einnahme der Arbeitsebene in einer ersten Hubposition (28) oder zumindest einer weiteren Hubposition (29) für die zumindest eine Werkstückauflage (22, 23, 69) verfahrbar ist, wobei die Hubvorrichtung (36) zumindest eine Kulisse (47) umfasst, welche horizontal verfahrbar ist und die Trägervorrichtung (32) mit den zumindest zwei Werkstückauflagen (22, 23, 69) gemeinsam zwischen der ersten Hubposition (28) und der zumindest einen weiteren Hubposition (29) zum Grundgestell (31) verfahrbar ansteuert. (Hierzu Figur 3)

## Beschreibung

Die Erfindung betrifft eine Wechselvorrichtung für einen Wechsel von wenigstens zwei Werkstückauflagen für eine Bearbeitungsmaschine, insbesondere eine Laserschneidmaschine, die wechselweise in die Bearbeitungsmaschine verfahren und aus dieser herausgeführt werden.

Aus der DE 10 2016 117 681 A1 ist eine Wechselvorrichtung für einen Wechsel von wenigstens zwei Werkstückauflagen für eine Laserschneidmaschine zur Bearbeitung von plattenförmigen Werkstücken bekannt. Diese Wechselvorrichtung, welche auch Palettenwechsler genannt wird, umfasst ein Grundgestell, welches eine Trägervorrichtung für zumindest zwei Werkstückauflagen aufweist. Die Trägervorrichtung ist in der Höhe verfahrbar, sodass eine der Werkstückauflagen in eine Arbeitsebene überführbar ist, in welcher die Werkstückauflage von der Trägervorrichtung in die Bearbeitungsmaschine verfahrbar und aus dieser herausführbar ist. Zwischen dem Grundgestell und der Trägervorrichtung ist eine Hubvorrichtung vorgesehen, durch welche die Trägervorrichtung in der Höhe relativ zum Grundgestell aus einer ersten Hubposition in zumindest eine weitere Hubposition verfahrbar ist, sodass wenigstens die eine Werkstückauflage in der Arbeitsebene anordenbar ist.

Die Hubvorrichtung kann durch Hydraulikzylinder, durch einen Kugelgewindeantrieb einen Rollenkettenantrieb, einen Elektrozylinder oder Linearmotoren erfolgen. Solche Hubvorrichtungen haben sich in der Praxis bewährt, jedoch sind diese aufgrund der Anzahl der Baukomponenten kostenintensiv.

Aus der EP 0 457 104 A1 ist ein Werkzeug-Wechseltisch für eine Brennschneidmaschine mit wenigstens zwei Paletten bekannt, die im Wechsel in den Arbeitsbereich der Brennschneidmaschine transportiert werden. Dabei erfolgt während des Transports ein Absenken einer Palette auf eine Ebene unterhalb der anderen Palette, wobei darauffolgend ein Verschieben der einen abgesenkten Palette unterhalb der anderen in der Arbeitsebene sich befindenden Palette erfolgt. Am Ende der Transportbewegung ist die in der Arbeitsebene verschobene Palette aus dem Arbeitsbereich der Brennschneidmaschine herausgeführt, und die andere Palette wird angehoben und wieder in den Arbeitsbereich der Brennschneidmaschine übergeführt. Für das Anheben und Absenken der einen Palette, die unterhalb der anderen verfahren wird, sind entlang eines Grundgestells horizontal verfahrbare Kulissenscheiben vorgesehen, welche V-förmig zueinander angeordnete schiefe Ebenen als Lauffläche aufweisen, die zum Heben und Senken der Palette dienen. Diese V-förmigen Vertiefungen in der Kulissenscheibe sind nach oben offen ausgerichtet.

Der Erfindung liegt die Aufgabe zugrunde, eine Wechselvorrichtung für einen Wechsel von wenigstens zwei Werkstückauflagen für eine Bearbeitungsmaschine vorzuschlagen, die einen einfachen Aufbau für einen prozesssicheren Wechsel der Werkstückauflagen ermöglicht.

Diese Aufgabe wird durch eine Wechselvorrichtung gelöst, welche eine Hubvorrichtung mit zumindest einer Kulisse umfasst, die horizontal verfahrbar ist und die Trägervorrichtung mit den zumindest zwei Werkstückauflagen gleichzeitig zwischen zumindest zwei Hubpositionen relativ zum Grundgestell verfahrbar ansteuert. Diese Wechselvorrichtung ermöglicht, dass lediglich durch eine Hubbewegung in vertikaler Richtung zwischen zumindest zwei Hubpositionen die Trägervorrichtung verfahrbar angesteuert ist, sodass in jeder der Hubpositionen eine Werkstückauflage in eine Arbeitsebene übergeführt ist, in welcher diese in die Bearbeitungsmaschine hineingefahren und wieder herausgeführt werden kann. Zudem weist eine solche Wechselvorrichtung den Vorteil auf, dass diese in der länglichen Erstreckung kurz ausgebildet ist. Durch die Ansteuerung der Trägervorrichtung nur mit der vertikalen Anhebe- und Senkbewegung mittels der zumindest einen Kulisse ist eine Vereinfachung in der Verfahrbewegung und so eine Erhöhung der Prozesssicherheit gegeben.

Vorteilhafterweise ist beidseitig zur Trägervorrichtung jeweils eine Kulisse vorgesehen. Dadurch kann ein einfacher Aufbau bei einer synchronen Ansteuerung der Verfahrbewegung der Kulisse gegeben sein.

Zur Durchführung einer Hubbewegung der Trägervorrichtung sind zumindest zwei Trägerrollen an dem Grundgestell und zumindest zwei Laufrollen an der Trägervorrichtung vorgesehen, wobei zwischen den Trägerrollen und den Laufrollen die zumindest eine plattenförmige Kulisse verfahrbar angeordnet und geführt ist. Auf diese Weise kann die Hubbewegung zwischen den zumindest zwei Hubpositionen ohne eine Hydraulik und mit wenigen Komponenten auf kostengünstige Weise realisiert werden. Zudem ist die Herstellung einer plattenförmigen Kulisse kostengünstig.

Die Trägerrollen und die Laufrollen weisen bevorzugt in deren jeweiligen Lauffläche eine Führungskontur auf, durch welche die plattenförmige Kulisse zwischen den Trägerrollen und den Laufrollen geführt ist. Vorteilhafterweise kann die Führungskontur durch eine U-förmige oder nutenförmige Vertiefung ausgebildet sein. Dadurch umgreift jeweils ein seitlicher Ringbund der Laufrolle und der Trägerrolle eine Außenseite der plattenförmigen Kulisse. Eine solche Ausgestaltung der Laufrollen und Trägerrollen genügt, um die plattenförmige Kulisse in einer stehenden Anordnung dazwischenliegend zu führen, so dass weitere Führungseinrichtungen am Grundgestell der Wechselvorrichtung nicht notwendig sind.

Des Weiteren sind bevorzugt die Trägerrollen und die Laufrollen senkrecht zur Bewegungsrichtung der Kulisse in einer gemeinsamen Ebene angeordnet und weisen vorzugsweise eine seitliche Positionsabweichung von weniger als 1 mm auf. Dadurch ist eine statisch stabile Anordnung gegeben sein. Zudem werden seitliche Verschiebekräfte, die auf die Kulisse einwirken könnten, eliminiert. Bevorzugt sind die den Trägerrollen zugeordneten Laufrollen im Wesentlichen vertikal oberhalb der Trägerrollen zugeordnet.

An zumindest einer Kulisse, vorzugsweise an jeder Kulisse, der Hubvorrichtung ist ein Antriebselement vorgesehen, welches mit einem komplementären Antriebselement zusammenwirkt, wobei eines der beiden Antriebselemente mit einem Antriebsmotor angesteuert ist. Durch diese Antriebselemente kann in einfacher Weise die Verfahrbewegung der Kulissen entlang dem Grundgestell angesteuert werden. Beispielsweise können als Antriebselemente ein Zahnrad beziehungsweise ein Zahnritzel und eine Zahnstange vorgesehen sein, die miteinander zusammenwirken.

Die vorzugsweise beidseits zur Trägervorrichtung angeordneten Kulissen weisen jeweils ein Antriebselement auf und werden vorteilhafterweise durch eine gemeinsame Antriebswelle mit einem Antriebsmotor angetrieben. Dadurch kann eine synchrone Hubbewegung durch eine gleichzeitige Verfahrbewegung der Kulissen zur Durchführung der Hubbewegung angesteuert werden.

Des Weiteren sind zwischen dem Grundgestell und der Trägervorrichtung bevorzugt Führungen vorgesehen, durch welche die Trägervorrichtung während einer Hubbewegung durch die Hubvorrichtung, bei der die Trägervorrichtung in der Höhe vertikal zum Grundgestell verfahren wird, geführt ist. Dadurch kann eine Verdrehung der Werkstückauflage zum Grundgestell verhindert sein. Zudem bleibt die Werkstückauflage in einer Ein- und Ausfahrrichtung zur Bearbeitungsmaschine ausgerichtet.

Bevorzugt bestehen die Führungen aus zumindest einer an einer Tragstütze gehaltenen Rundführung und zumindest zwei, vorzugsweise drei, an Tragstützen vorgesehenen Gleitführungen, wobei vorzugsweise an zwei einander gegenüberliegenden Außenseiten der Trägervorrichtung, an der auch die Hubvorrichtung angreift, die zumindest eine Rundführung und/oder die zumindest eine Gleitführung vorgesehen ist. Die Rundführung ermöglicht eine Lagefixierung der Trägervorrichtung zum Grundgestell. Die Gleitführungen, insbesondere drei Gleitführungen, verhindern ein Verdrehen der Trägervorrichtung zum Grundgestell.

Die Kulisse der Hubvorrichtung umfasst zur Ansteuerung der Hubbewegung vorteilhafterweise einen oberen und einen unteren Endabschnitt, die jeweils horizontal ausgerichtet sind, und dazwischenliegend zumindest einen ansteigenden Kurvenverlauf, wobei eine Steigung mit einer Selbsthemmung für die Hubbewegung der Trägervorrichtung für den Kurvenverlauf vorgesehen ist. Die horizontal ausgerichteten Endabschnitte ermöglichen eine sichere vertikale Position der Trägervorrichtung unabhängig von einer Positioniergenauigkeit des Antriebes. Dies ermöglicht wiederum eine Kosteneinsparung. Durch die selbsthemmende Steigung des Kurvenverlaufes der Kulisse behält die Trägervorrichtung bei einem Nothalt während der Hubbewegung ihre Position bei.

Die horizontale Verfahrbewegung der Kulisse ist vorteilhafterweise beidseitig durch jeweils einen Anschlag begrenzt, der bevorzugt am Grundgestell vorgesehen ist. Dadurch wird ein unbeabsichtigtes Herausführen der Kulisse aus den übereinanderliegenden Trägerrollen und Laufrollen sowie ein Herabfallen der Trägervorrichtung vom Grundgestell verhindert.

Vorteilhafterweise sind in einer Endposition der Kulisse, in welcher diese an dem Endanschlag anliegt, die Antriebselemente in einem entkoppelten Zustand zueinander angeordnet. Dabei ist bevorzugt die Kulisse weiterhin zwischen den Trägerrollen und den Laufrollen geführt. Eine solche Einnahme einer entkoppelten Position der Antriebsräder ermöglicht, dass die Wechselvorrichtung in einem Fehlerfall selbstständig anhält.

Zwischen dem Grundgestell und der Trägervorrichtung ist vorteilhafterweise ein höhenverstellbarer Anschlag vorgesehen, auf welchem die Trägervorrichtung in einer unteren oder ersten Hubposition aufliegt, in welcher die Kulisse der Hubvorrichtung lastfrei zwischen der Trägervorrichtung und dem Grundgestell durch die Tragrollen und die Laufrollen gehalten ist. Eine solche Anordnung ermöglicht einen einfachen Austausch der Kulisse im Schadenfall oder eine Anpassung an eine Hubposition mit einer neuen Arbeitsebene oder eine Anpassung der Kurvensteigung. Auf diese Weise sind die Hubzeiten bzw. Hubkräfte veränderbar und können an unterschiedliche Anforderungen angepasst werden: Je flacher die Kurvenbahn verläuft, desto weniger Hubkraft wird benötigt, gleichzeitig verlängert sich jedoch die Hubzeit. Sollen mit der Bearbeitungsmaschine, insbesondere Lasermaschine, nur Werkstücke geringer Dicke (Dünnblech) bearbeitet werden, kann daher eine steilere Kurvenbahn gewählt werden, damit der Hub schneller erfolgt. Bei der Bearbeitung von Werkstücken mit großer Dicke wird eine flachere Kurvenbahn gewählt. Zusätzliche Lastanhebemittel oder dergleichen zum Halten der Trägervorrichtung sind für einen solchen Wechsel der Kulisse nicht erforderlich.

Eine bevorzugte Weiterbildung der Kulisse sieht zwischen dem oberen und unteren horizontalen Endabschnitt zumindest einen weiteren horizontalen Endabschnitt dazwischenliegend vor. Bei beispielsweise einem unteren horizontalen Endabschnitt, einem mittleren horizontalen Endabschnitt und einem oberen horizontalen Endabschnitt ist die Trägervorrichtung auf drei Hubpositionen einstellbar. In einem solchen Fall kann die Trägervorrichtung drei Werkstückauflagen aufnehmen und einen Wechsel von jeder der drei Werkstückauflagen ermöglichen.

Die Trägervorrichtung weist gemäß einer Ausführungsform zumindest zwei U-förmige Längsprofile auf, die insbesondere durch Querstreben miteinander verbunden sind und einen geschlossenen Rahmen bilden, wobei die offenen, U-förmigen Längsprofile aufeinander zu gerichtet sind, sodass jeder Schenkel des U-förmigen Längsprofils eine Lauffläche für eine auf Rollen gelagerte Werkstückauflage bildet. Dadurch ist wiederum ein kostengünstiger Aufbau gegeben.

An dem Grundgestell sind vorteilhafterweise höhenverstellbare Füße vorgesehen, durch welche die Arbeitsebene und zumindest eine Hubposition der Trägervorrichtung auf einer Fahrspurhöhe der Bearbeitungsmaschine zum Ein- und Ausfahren der Werkstückauflage einstellbar ist. Dadurch kann die Werkstückauflage stoßfrei in die Bearbeitungsmaschine ein- und wieder herausgefahren werden.

Das Grundgestell der Wechselvorrichtung umfasst gemäß einer bevorzugten Ausführungsform zwei im Abstand zueinander angeordnete U-förmige, vorzugsweise nach oben offen ausgerichtete, Seitenträger, wobei vorzugsweise ein Endbereich durch eine Verschraubung mit einem Grundkörper der Bearbeitungsmaschine fest verbunden ist und ein gegenüberliegender Endbereich durch einen Quersteg oder eine Verkleidung fest miteinander verbunden ist. Dadurch kann eine direkte Anbindung zur Bearbeitungsmaschine erfolgen. Zudem kann ein steifer - quasi geschlossener - Rahmen für das Grundgestell gebildet sein. Gemäß einer alternativen Ausgestaltung des Grundgestells besteht dieses aus zwei einzeln aufstellbaren L-förmigen Seitenträgern, wobei vorzugsweise wiederum ein Endbereich des Grundgestells durch eine Verschraubung mit dem Grundkörper der Bearbeitungsmaschine und ein gegenüberliegender Endbereich durch einen Quersteg oder eine Verkleidung fest miteinander verbunden ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsanlage mit einer Bearbeitungsmaschine und einer Wechselvorrichtung,
Figur 2 eine perspektivische Ansicht der Wechselvorrichtung gemäß Figur 1 in einer ersten Hubposition,
Figur 3 eine perspektivische Ansicht der Wechselvorrichtung gemäß Figur 2 in einer weiteren Hubposition,
Figur 4 eine schematische Ansicht von oben auf die Wechselvorrichtung mit nicht dargestellter Werkstückauflage,
Figur 5 eine schematische Seitenansicht der Wechselvorrichtung gemäß Figur 3,
Figur 6 eine schematische Detailansicht eines Grundgestells und einer Trägervorrichtung der Wechselvorrichtung,
Figur 7 eine perspektivische Detailansicht einer Führung der Trägervorrichtung gemäß Figur 2,
Figur 8 eine perspektivische Ansicht einer weiteren Führung der Trägervorrichtung gemäß Figur 2,
Figur 9 eine perspektivische Ansicht einer alternativen Ausführungsform der Wechselvorrichtung zu Figur 2,
Figur 10 eine perspektivische Ansicht einer weiteren alternativen Ausführungsform der Wechselvorrichtung zu Figur 2,
Figur 11 eine perspektivische Ansicht des Grundgestells und der Trägervorrichtung in einer ersten Hubposition gemäß der Wechselvorrichtung in Figur 10, und
Figur 12 eine perspektivische Ansicht des Grundgestells und der Trägervorrichtung in einer weiteren Hubposition der Wechselvorrichtung gemäß Figur 10.

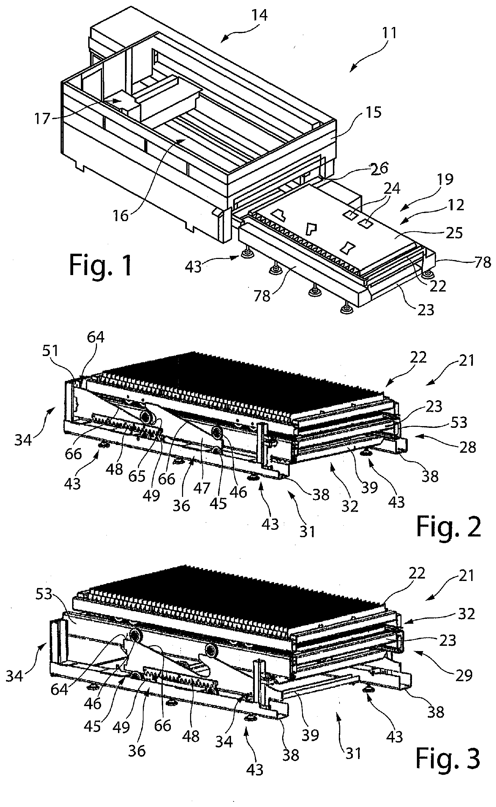

In Figur 1 ist perspektivisch eine Bearbeitungsanlage 11 zur trennenden Bearbeitung von plattenförmigen Materialien 12 dargestellt, die aus Metall bestehen. Diese Bearbeitungsanlage 11 umfasst eine Bearbeitungsmaschine 14, welche im gezeigten Beispiel eine Laserschneidmaschine ist. Die Bearbeitungsmaschine 14 kann alternativ auch eine Plasmaschneidemaschine oder Stanz-Laser-Kombinationsmaschine sein. Die Bearbeitungsmaschine 14 umfasst eine Umhausung 15. Innerhalb der Umhausung 15 ist eine Bearbeitungsstation 16 vorgesehen, in der eine Schneideinheit 17 mit zumindest einem Laserschneidkopf innerhalb einer horizontalen Bewegungsebene verfahrbar ist.

Außerhalb der Umhausung 15 ist eine Be- und Entladestation 19 vorgesehen. Diese Be- und Entladestation 19 umfasst zumindest eine Wechselvorrichtung 21 für zumindest zwei Werkstückauflagen 22, 23. Ergänzend und nicht näher dargestellt kann eine Handlingsvorrichtung der Wechselvorrichtung 21 zugeordnet sein, durch welche das plattenförmige Material 12 in unbearbeiteter Form, also als Rohmaterial, auf die Werkstückauflage 22 aufgelegt wird, bevor die Werkstückauflage 22 in die Bearbeitungsstation 16 bewegt wird. Danach erfolgt eine Bearbeitung des plattenförmigen Materials 12, um Werkstücke 24, insbesondere Gutteile, herzustellen. Dabei entstehen gleichzeitig auch Restteile oder ein Restgitter 25. Nach dem Herausfahren der Werkstückauflage 21 aus der Bearbeitungsstation 16 können manuell oder durch die Handlingseinrichtung die Werkstücke 24 und/oder Restteile oder ein Restgitter 25 entnommen werden.

Die Werkstückauflage 22, 23 wird durch eine Öffnung 26 in der Umhausung 15 ein- und ausgefahren. Diese Öffnung 15 kann durch ein nicht näher dargestelltes Verschlusselement, wie beispielsweise eine Tür oder eine Klappe, verschlossen sein und wird während der Verfahrbewegung der Werkstückauflage 22, 23 geöffnet.

In Figur 2 ist eine perspektivische Ansicht der Wechselvorrichtung 21 in einer ersten Hubposition 28 dargestellt. Die Figur 3 zeigt die Wechselvorrichtung 21 in einer weiteren Hubposition 29. Die Wechselvorrichtung 21 umfasst ein Grundgestell 31 mit einer Trägervorrichtung 32, welche entlang von Führungen 34 zwischen der ersten Hubposition 28 und der zumindest einen weiteren Hubposition 29 auf und ab bewegbar sind. Für diese Hubbewegung der zumindest zwei Werkstückauflagen 22, 23 in der Trägervorrichtung 32 ist eine Hubvorrichtung 36 vorgesehen, welche zwischen dem Grundgestell 31 und der Trägervorrichtung 32 wirkt.

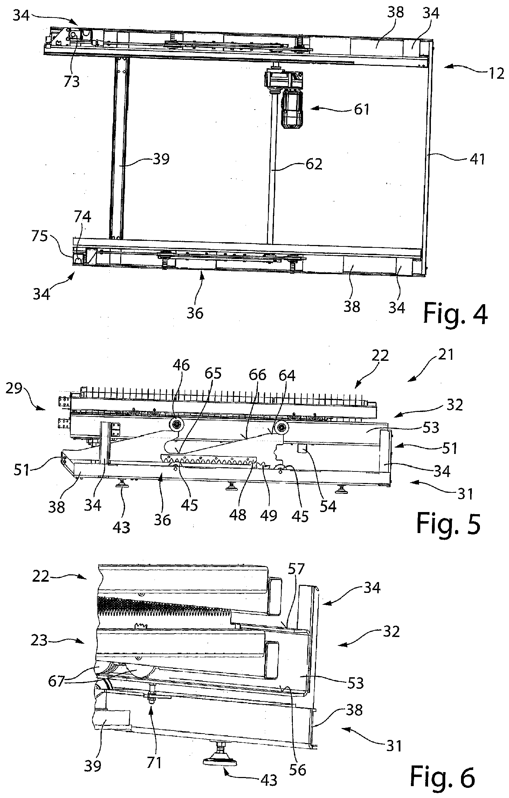

Das Grundgestell 31 ist durch zwei U-förmige Seitenträger 38 gebildet, welche durch zumindest einen Quersteg 39 (Figur 3) und/oder eine stirnseitige Verkleidung 41 (Figur 4) im Abstand zueinander fixiert sind. Dadurch kann ein geschlossener Rahmen gebildet sein. An einer Unterseite der Seitenträger 38 sind in der Höhe einstellbare Füße 43 vorgesehen, um das Grundgestell 31 bzw. die Werkstückauflagen 22, 23 in der Arbeitsebene auszurichten, damit diese stoßfrei in die Bearbeitungsstation 16 ein- und ausgefahren werden können.

Die Hubvorrichtung 36 umfasst wenigstens zwei Trägerrollen 45, die mit Abstand zueinander an dem Seitenträger 38 drehbar gelagert sind. Des Weiteren umfasst die Hubvorrichtung 36 zwei Laufrollen 46, die seitlich an der Trägervorrichtung 32 außerhalb eines Aufnahmebereichs der Werkstückauflagen 22, 23 zur Aufnahme des plattenförmigen Materials 12 angeordnet sind. Zwischen den Trägerrollen 45 und den Laufrollen 46 ist eine Kulisse 47 vorgesehen. Diese Kulisse 47 ist plattenförmig ausgebildet und kann auch als Kurvenbahnplatte bezeichnet werden. Die Laufrollen 46 und Trägerrollen 45 weisen in deren jeweiligen Lauffläche eine U-förmige Vertiefung auf, um die Kulisse 47 in der stehenden Anordnung zwischen den Trägerrollen 45 und den Laufrollen 46 zu führen.

An der Kulisse 47 ist des Weiteren ein Antriebselement 48 lösbar befestigt oder einteilig ausgebildet vorgesehen. Dieses Antriebselement 48 wirkt mit einem komplementären Antriebselement 49 zusammen. Dadurch kann eine horizontale Verfahrbewegung der Kulisse 47 angesteuert werden.

Diese Anordnung bestehend aus den Trägerrollen 45, den Laufrollen 46 und der dazwischen angeordneten Kulisse 47 ist bevorzugt beidseitig an den Außenseiten der Trägervorrichtung 32 vorgesehen. Dadurch ist eine gleichmäßige Hubbewegung und ein ungehindertes Ein- und Ausfahren der Werkstückauflagen 22, 23 zur Trägervorrichtung 32 gegeben.

Bei der Einnahme einer ersten Hubposition 28 der Wechselvorrichtung 21 ist die Kulisse 47 nach links verfahren (Figur 2). In dieser ersten Hubposition 28 ist die Trägervorrichtung 32 abgesenkt. Diese erste Hubposition 28 ermöglicht, dass die obere Werkstückauflage 22 in der Arbeitsposition angeordnet ist, in der diese in die Bearbeitungsmaschine 14 ein- und herausgefahren werden kann.

Die Trägervorrichtung 32 besteht beispielsweise aus zwei offenen, U-förmigen Längsprofilen 53, welche aufeinander zu weisend ausgerichtet sind. Diese Längsprofile 53 sind bevorzugt durch Querstreben 54 zueinander beabstandet und bilden insbesondere einen geschlossenen Rahmen. Die beiden parallel ausgerichteten Schenkel des U-förmigen Längsprofils 53 bilden bevorzugt jeweils eine Lauffläche 56, 57 für die Werkstückauflage 22, 23, wobei die Werkstückauflage 22, 23 jeweils Rollen zu deren verfahrbaren Anordnung umfasst. Die Höhe des Längsprofils 53 ist an die Rahmenhöhe der Werkstückauflage oder deren Gesamthöhe angepasst, sodass diese parallel übereinanderliegend in die Trägervorrichtung 32 aufgenommen werden können.

In Figur 3 ist eine perspektivische Ansicht der Wechselvorrichtung 21 gemäß Figur 2 in einer weiteren Hubposition 29 gezeigt. Die Kulisse 47 ist in eine rechte Position verfahren worden. Die Trägervorrichtung 32 ist dadurch gegenüber der ersten Hubposition 28 in Figur 2 angehoben.

Zur Ansteuerung der Hubbewegung ist ein Antrieb 61, insbesondere ein Elektromotor, mit einem Getriebe vorgesehen, der eine Antriebswelle 62 antreibt. Dies ist in einer Draufsicht in Figur 4 dargestellt. Am jeweiligen Ende der Antriebswelle 62 ist bevorzugt das eine komplementäre Antriebselement 49, insbesondere ein Zahnritzel, vorgesehen, wodurch das an der Kulisse 47 vorgesehene Antriebselement 48, insbesondere eine Zahnstange, die mit der Kulisse 47 fest verbunden ist, angetrieben ist. Durch die synchrone Antriebsbewegung der Antriebselemente 49 kann eine gleichzeitige Verfahrbewegung der beiden Kulissen 47 eingeleitet werden, um die Trägervorrichtung 32 anzuheben oder zu senken.

Die Hubvorrichtung 36 umfasst gemäß der Ausführungsform in Figur 2 und Figur 3 eine Kulisse mit einem oberen horizontalen Endabschnitt 64 und einem unteren horizontalen Endabschnitt 65 sowie dazwischenliegend mit einem Kurvenverlauf 66. Dadurch kann eine erste Hubposition 28 bzw. eine untere Hubposition gemäß Figur 2 und eine weitere Hubposition 29 bzw. eine obere Hubposition gemäß Figur 3 ansteuerbar sein. Der Kurvenverlauf 66 umfasst bevorzugt eine Steigung mit einer Selbsthemmung, sodass bei einem Ausfall des Antriebes 61 die Trägervorrichtung 32 in der zuletzt angefahrenen Position bei Stillstand des Antriebes 61 selbsthaltend positioniert ist. Dadurch ist eine Sicherheitsfunktion gegen unbeabsichtigtes Absenken gegeben. Bevorzugt ist zwischen dem oberen Endabschnitt 64 und dem Kurvenverlauf 66 und/oder zwischen dem unteren Endabschnitt 65 und dem Kurvenverlauf 66 ein Übergangsbereich geringerer Steigung für ein sanftes Anfahren bei der Hub- oder Senkbewegung vorgesehen.

In Figur 5 ist eine schematische Seitenansicht der Wechselvorrichtung 21 gemäß Figur 3 dargestellt, wobei gegenüber der Figur 3 eine gegenüberliegende Seite der Wechselvorrichtung 21 dargestellt ist. Die Laufrollen 46 an der Trägervorrichtung 32 liegen bevorzugt oberhalb der am Grundgestell 31 befestigten Trägerrollen 45. Dadurch kann ein optimaler Lastabtrag beim Heben und Senken der Trägervorrichtung 32 gegeben sein. Durch den oberen und unteren horizontalen Endabschnitt 64, 65 kann zur Einnahme der ersten Hubposition 28 und der weiteren Hubposition 29 eine toleranzbehaftete Ansteuerung der Kulisse 47 gegeben sein.

Die Kulisse 47 der Hubvorrichtung 36 ist in einer linken Endposition dargestellt, in welcher der Anschlag 51 eine Verfahrbewegung nach links verhindert bzw. die Kulisse 47 an dem Anschlag 51 anliegt. Gegenüberliegend ist ein weiterer Anschlag 51 vorgesehen. In dieser Position der Kulisse 47, in welcher die Kulisse 47 am rechten oder linken Anschlag 51 anliegt, ist das Antriebselement 49 außer Eingriff zum Antriebselement 48. Hierbei handelt es sich um einen Fehlerfall, bei dem jedoch sicherstellt ist, dass kein unbeabsichtigtes Absenken der Trägervorrichtung 32 erfolgt. Zur weiteren Inbetriebnahme kann die Kulisse 47 wieder nach rechts bzw. links verschoben werden, sodass die Antriebselemente 48, 49 wieder aneinander angreifen, um eine Hubbewegung anzusteuern.

In Figur 6 ist eine perspektivische Teilansicht des Grundgestells 31 und der Trägervorrichtung 32 dargestellt. Daraus ist ersichtlich, dass die Werkstückauflage 22, 23 auf Rollen 67 gelagert ist, welche auf der Lauffläche 56 des Längsprofils 53 der Trägervorrichtung 32 aufliegen. Ergänzend ist an dem Grundgestell 31 ein vorzugsweise höhenverstellbarer Anschlag 71 vorgesehen, durch welchen die maximal absenkbare Höhe der Trägervorrichtung 32 gegenüber dem Grundgestell 31 einstellbar ist. Dieser Anschlag 71 ermöglicht, dass die Kulisse 47 in einer Anordnung gemäß Figur 2 lediglich zwischen den Laufrollen 46 und Trägerrollen 45 geführt ist. Die Trägervorrichtung 32 liegt auf den Anschlägen 71 am Grundgestell 31 auf. Dadurch ist die Kulisse 47 lastfrei und kann in einfacher Weise zwischen den beiden Trägerrollen 45 und Laufrollen 46 herausgeführt und eine neue Kulisse 47 eingesetzt werden.

Die Trägervorrichtung 32 ist am Grundgestell 31 durch vorzugsweise vier Führungen 34 geführt. Diese Führungen 34 sind nahe dem jeweiligen Eckbereich der Werkstückauflage 22, 23 angeordnet. Dies geht aus der Draufsicht in Figur 4 hervor.

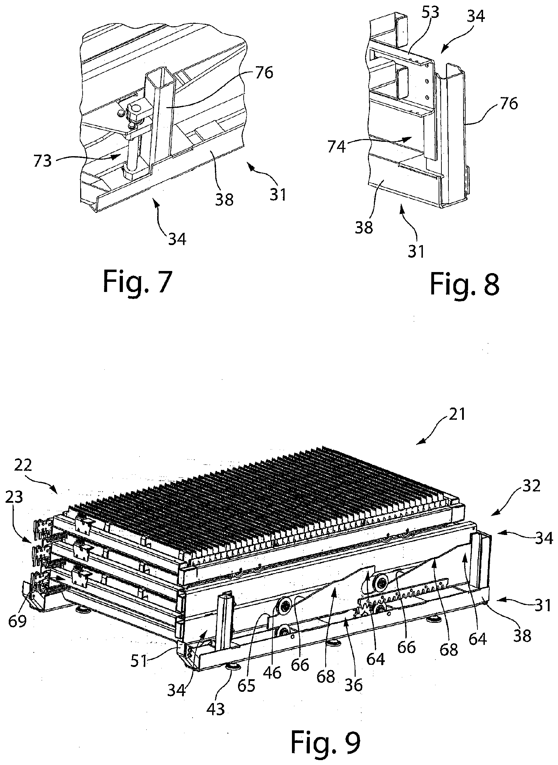

Bei dieser Ausführungsform der Wechselvorrichtung 21 gemäß den Figuren 2 bis 6 ist eine der Führungen 34 als eine Rundführung 73 ausgebildet. Eine solche Rundführung 73 ist perspektivisch in Figur 7 dargestellt. Die Rundführung 73 ist durch eine Tragstütze 76 zum Seitenträger 38 des Grundgestells 31 gehalten. Durch eine solche Rundführung 73 ist die Trägervorrichtung 32 zum Grundgestell 31 bezüglich der vertikalen Achse fixiert. Die weiteren drei Führungen 34 sind als Gleitführung 74 ausgebildet, welche in Figur 8 dargestellt ist. Dabei liegt eine Gleitfläche 75 an einer Tragstütze 76 an, die am Seitenträger 38 des Grundgestells 31 befestigt ist. Durch eine solche Anordnung wird eine lagerichtige Positionierung der Trägervorrichtung 32 zum Grundgestell 31 aufrechterhalten und eine Verdrehung relativ zueinander verhindert.

Bei der vorstehenden Darstellung der Wechselvorrichtung 21 gemäß den Figuren 2 und 3 können seitliche Verkleidungsteile 78, welche in Figur 1 dargestellt sind, vorgesehen sein, welche in den weiteren Figuren entnommen sind, um den Aufbau und die Funktion der Hubvorrichtung 36 zu erkennen.

In Figur 9 ist eine perspektivische Seitenansicht der Wechselvorrichtung 21 mit einer alternativen Ausführungsform der Hubvorrichtung 36 zu den Figuren 2 und 3 dargestellt. Bei dieser Hubvorrichtung 36 ist abweichend zur vorstehend beschriebenen Kulisse 47 vorgesehen, dass zwischen dem oberen Endabschnitt 64 und dem unteren Endabschnitt 65 ein weiterer horizontaler Abschnitt 68 vorgesehen ist. Dadurch kann die Trägervorrichtung 32 in einer ersten Hubposition 28, in einer mittleren Hubposition aufgrund des horizontalen Abschnittes 68 und in einer oberen Hubposition 29 durch den oberen Endabschnitt 64 übergeführt werden. Bevorzugt weist die Trägervorrichtung 32 zwei übereinander angeordnete Längsprofile 53 auf, um drei Werkstückauflagen 22, 23, 69 aufzunehmen. Es versteht sich, dass bei der Ausgestaltung der Kulisse 47 mit weiteren horizontalen Abschnitten zwischen den Endabschnitten 64, 65 die Anzahl der Werkstückauflagen entsprechend erhöht werden kann. Im Übrigen gelten die Ausführungen und vorteilhaften Ausgestaltungen zu den vorbeschriebenen Ausführungsformen gemäß den Figuren 1 bis 8.

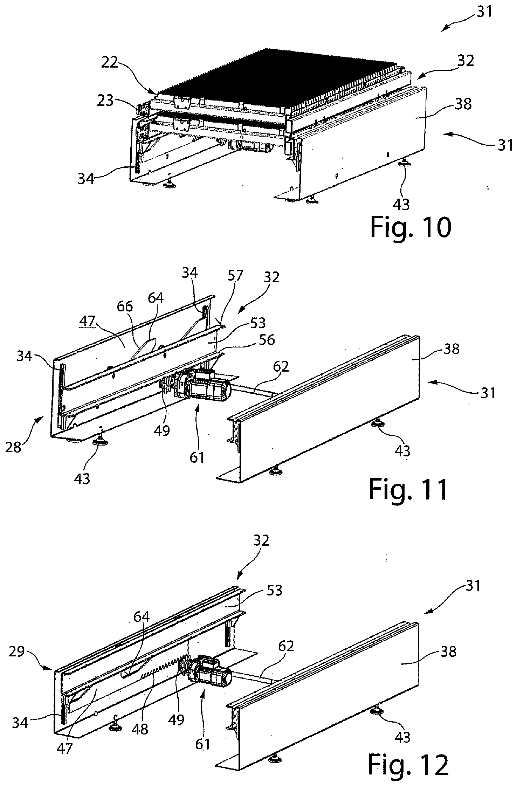

In Figur 10 ist eine perspektivische Ansicht einer alternativen Ausführungsform der Wechselvorrichtung 21 zu den Figuren 2 und 3 dargestellt. Bei dieser Ausführungsform ist das Grundgestell 31 abweichend zur Ausführungsform gemäß den Figuren 2 und 3 ausgebildet. Bei der vorliegenden Ausführungsform besteht das Grundgestell 31 aus zwei symmetrisch zueinander angeordneten, vorzugsweise L-förmigen, Seitenträgern 38. Diese Seitenträger 38 sind vorzugsweise selbsttragend ausgebildet.

An den vertikalen Abschnitten der L-förmigen Seitenträger 38 sind an den jeweiligen Innenseiten Führungen 34 vorgesehen, entlang denen die Trägervorrichtung 32 auf und ab bewegbar ist. Die Trägervorrichtung 32, die Hubvorrichtung 36 sowie der Antrieb 61 mit der Antriebswelle 62 entsprechen den vorbeschriebenen Ausführungsformen der Figuren 1 bis 9.

Diese Seitenträger 38 können an einem Endabschnitt durch einen Quersteg oder eine Verkleidung 41 in Analogie zu Figur 4 miteinander verbunden sein. Am gegenüberliegenden Endbereich sind die L-förmigen Seitenträger 38 mit einem Grundkörper der Bearbeitungsmaschine 14 verbunden, insbesondere verschraubt.

In Figur 11 ist eine perspektivische Ansicht des Grundgestells 31 mit der Trägervorrichtung 32 gemäß Figur 10 dargestellt, wobei zur Wahrung der Übersichtlichkeit die Werkstückauflagen 22, 23 nicht dargestellt sind. Die Längsprofile 53 der Trägervorrichtung 32 sind in einer ersten Hubposition 28 vorgesehen. Bei dieser Ausführungsform des Grundgestells 31 können die Querstreben 54, welche sich zwischen den Längsprofilen 53 der Trägervorrichtung 32 erstrecken, entfallen.

In Figur 12 ist die Wechselvorrichtung 21 in Analogie zu Figur 11 dargestellt, wobei die Längsprofile 53 der Trägervorrichtung 32 in einer weiteren Hubposition 29 beziehungsweise einer oberen Hubposition 29 verfahren sind. Die Ansteuerung und Durchführung der Hubbewegung erfolgt wie in der Wechselvorrichtung 21 gemäß den Figuren 2 und 3.

Bei dieser Wechselvorrichtung 21 gemäß den Figuren 10 bis 12 sind die Führungen 34 beispielsweise als Linearführung oder Längsführung ausgebildet, wobei vorzugsweise an jedem Seitenträger 38 zwei, vorzugsweise gleiche, Führungen 34 vorgesehen sind. Die Führungen 34 sind mit Abstand zueinander an den Seitenträgern 38 befestigt, sodass dazwischenliegend die Kulisse 47 horizontal verfahrbar ist. Zwischen einem jeweiligen Ende des Verfahrweges der Kulisse 47 und der jeweils zugeordneten Führung 34 kann noch ein Anschlag 51 zur Begrenzung des Verfahrweges der Kulisse 47 vorgesehen sein, bei dem die Antriebselemente 48, 49 außer Eingriff sind.

## Patentansprüche

1. Wechselvorrichtung für einen Wechsel von wenigstens zwei Werkstückauflagen (22, 23, 69) für eine Bearbeitungsmaschine (14)
- mit einem Grundgestell (31), welches eine Trägervorrichtung (32) für zumindest zwei Werkstückauflagen (22, 23, 69) aufweist, die in der Höhe durch die Trägervorrichtung (32) verfahrbar sind, sodass eine der Werkstückauflagen (22, 23, 69) in eine Arbeitsebene überführbar ist, in welcher die Werkstückauflage (22, 23, 69) von der Trägervorrichtung (32) in die Bearbeitungsmaschine (14) hineinfahrbar und aus dieser herausführbar ist, und
- mit einer zwischen dem Grundgestell (31) und der Trägervorrichtung (32) wirkenden Hubvorrichtung (36), durch welche die Trägervorrichtung (32) in der Höhe relativ zum Grundgestell (31) zur Einnahme der Arbeitsebene in einer ersten Hubposition (28) oder zumindest einer weiteren Hubposition (29) für jeweils eine der Werkstückauflagen (22, 23, 69) verfahrbar ist,
**dadurch gekennzeichnet,**
- **dass** die Hubvorrichtung (36) zumindest eine Kulisse (47) umfasst, welche horizontal verfahrbar ist und die Trägervorrichtung (32) mit den zumindest zwei Werkstückauflagen (22, 23, 69) gemeinsam zwischen der ersten Hubposition (28) und der zumindest einen weiteren Hubposition (29) zum Grundgestell (31) verfahrbar ansteuert.

2. Wechselvorrichtung nach Anspruch 1, **dadurch gekennzeichnet, dass** beidseitig zur Trägervorrichtung (32) jeweils eine Hubvorrichtung (36) mit einer Kulisse (47) vorgesehen ist.

3. Wechselvorrichtung nach Anspruch 1 oder 2, **dadurch gekennzeichnet, dass** die Kulisse (47) plattenförmig ausgebildet ist und zwischen zumindest zwei am Grundgestell (31) angeordneten Trägerrollen (45) und zumindest zwei an der Trägervorrichtung (32) angeordneten Laufrollen (46) verfahrbar geführt ist.

4. Wechselvorrichtung nach Anspruch 3, **dadurch gekennzeichnet, dass** die Trägerrollen (45) und die Laufrollen (46) in der jeweiligen Lauffläche eine Führungskontur, insbesondere U-förmige oder nutenförmige Führungskontur, aufweist, durch welche die plattenförmige Kulisse (47) zwischen den Trägerrollen (45) und den Laufrollen (46) geführt ist.

5. Wechselvorrichtung nach Anspruch 3 oder 4, **dadurch gekennzeichnet, dass** die Trägerrollen (45) und die Laufrollen (46) senkrecht zur Bewegungsrichtung der Kulisse (47) in einer gemeinsamen Ebene angeordnet sind und vorzugsweise eine seitliche Positionsabweichung senkrecht zur Bewegungsrichtung der Kulisse (47) von weniger als 1 mm aufweisen.

6. Wechselvorrichtung nach einem der vorhergehenden Ansprüche, **dadurch gekennzeichnet, dass** an zumindest einer Kulisse (47) der Hubvorrichtung (36), vorzugsweise an jeder Kulisse (47), ein Antriebselement (48) vorgesehen ist, welches mit einem komplementären Antriebselement (49) zusammenwirkt, wobei eines der Antriebselemente (48, 49) mit einem Antriebsmotor (61) angesteuert ist, und vorzugsweise das an der Kulisse (47) angeordnete Antriebselement (48) als eine Zahnstange ausgebildet ist, welches von einem als Antriebsritzel ausgebildeten komplementären Antriebselement (49) angetrieben wird.

7. Wechselvorrichtung nach Anspruch 6, **dadurch gekennzeichnet, dass** die beidseitig der Trägervorrichtung (32) angeordneten Kulissen (47) jeweils von einem Antriebselement (49) verfahrbar angesteuert sind, an denen eine gemeinsame Antriebswelle (62) angreift, die vom Antriebsmotor (61) angetrieben ist.

8. Wechselvorrichtung nach einem der vorhergehenden Ansprüche, **dadurch gekennzeichnet, dass** die Kulisse (47) der Hubvorrichtung (36) einen oberen und einen unteren Endabschnitt (64, 65) aufweist, die horizontal verlaufend ausgebildet sind und dazwischenliegend einen ansteigenden Kurvenverlauf (66) aufweisen, der eine Steigung mit einer Selbsthemmung für die Hubbewegung der Trägervorrichtung (32) aufweist.

9. Wechselvorrichtung nach einem der Ansprüche 6 bis 8, **dadurch gekennzeichnet, dass** die horizontale Verfahrbewegung der Kulisse (47) beidseitig durch jeweils einen Endanschlag (51) begrenzt ist, der vorzugsweise am Grundgestell (31) vorgesehen ist, und insbesondere, dass das Antriebselement (48) der Kulisse (47) zum komplementären Antriebselement (49) entkoppelt ist, sofern die Kulisse mit einem Endabschnitt (64, 65) am Endanschlag (51) anliegt.

10. Wechselvorrichtung nach einem der vorhergehenden Ansprüche, **dadurch gekennzeichnet, dass** zwischen dem Grundgestell (31) und der Trägervorrichtung (32) ein höhenverstellbarer Anschlag (71) vorgesehen ist, auf welchem die Trägervorrichtung (32) in einer ersten Hubposition (28) aufliegt, in der die zumindest eine Kulisse (47) lastfrei zwischen der Trägervorrichtung (32) und dem Grundgestell (31) durch die Trägerrollen (45) und Laufrollen (46) gehalten ist.

11. Wechselvorrichtung nach einem der Ansprüche 8 bis 10, **dadurch gekennzeichnet, dass** die zumindest eine Kulisse (47) zwischen dem oberen und unteren horizontalen Endabschnitt (65, 66) zumindest einen weiteren horizontalen Endabschnitt (68) aufweist und dazwischenliegend jeweils ein Kurvenverlauf (66) vorgesehen ist und die Trägervorrichtung (32) entsprechend der Anzahl des oberen Endabschnitts (24), des unteren Endabschnitts (25) und dem zumindest einen weiteren horizontalen Endabschnitt (68) eine Anzahl von Werkstückauflagen (22, 23, 69) aufnimmt.

12. Wechselvorrichtung nach einem der Ansprüche, **dadurch gekennzeichnet, dass** zwischen dem Grundgestell (31) und der Trägervorrichtung (32) Führungen (34) vorgesehen sind, durch welche die Trägervorrichtung (32) vertikal in der Höhe verfahrbar zum Grundgestell (31) geführt ist, und vorzugsweise die Führungen (34) als Linearführungen ausgebildet sind oder die Führungen (34) als zumindest eine Rundführung (73) und als zumindest zwei, vorzugsweise drei, Gleitführungen (74) ausgebildet sind.

13. Wechselvorrichtung nach einem der vorhergehenden Ansprüche, **dadurch gekennzeichnet, dass** die Trägervorrichtung (32) zumindest zwei U-förmige Längsprofile (53) aufweist, die vorzugsweise durch Querstreben (54) miteinander verbunden sind und einen geschlossenen Rahmen bilden, wobei die offenen Seiten der Längsprofile (53) aufeinander zuweisend ausgerichtet sind und jeder Schenkel des Längsprofiles (53) eine Lauffläche (56, 57) für die auf Rollen (67) gelagerten Werkstückauflagen (22, 23, 69) bildet.

14. Wechselvorrichtung nach einem der vorhergehenden Ansprüche, **dadurch gekennzeichnet, dass** am Grundgestell (31) höhenverstellbare Füße (43) vorgesehen sind, durch welche die Arbeitsebene in der ersten Hubposition (28) oder der zumindest einen weiteren Hubposition (29) auf eine Fahrspurhöhe der Bearbeitungsmaschine (14) zum Hineinfahren und Herausführen der Werkstückauflage (22, 23, 69) einstellbar ist.

15. Wechselvorrichtung nach einem der vorhergehenden Ansprüche, **dadurch gekennzeichnet, dass** das Grundgestell (31) zwei einzeln aufstellbare L-förmige Seitenträger (38) oder zwei im Abstand zueinander angeordnete U-förmige, vorzugsweise nach oben ausgerichtete, Seitenträgern (38) umfasst und vorzugsweise ein Endbereich der Seitenträger (38) durch eine Verschraubung mit einem Grundkörper der Bearbeitungsmaschine (14) fest verbunden ist.
